# FASCICULE DE BREVET EUROPEEN

(11) **EP 1 775 986 B1**
(45) Date de publication et mention de la délivrance du brevet: **15.04.2009**
(21) Numéro de dépôt: 06122394.7
(22) Date de dépôt: 17.10.2006
(51) Int. Cl.: H04W 64/00, H04L 29/06

(54) **Dispositif de transmission de données vidéos vers un terminal mobile se déplaçant le long d'un chemin prévu**
Vorrichtung zur Übertragung von Videodateien an ein auf einer geplanten Route sich bewegendes Mobilendgerät
Device for transmitting video data to a mobile terminal moving along a planned route

(30) Priorité: 17.10.2005 FR 0553137
(43) Date de publication de la demande: 18.04.2007
(73) Titulaire: Alcatel Lucent, 75008 Paris (FR)
(72) Inventeur: Dautun, Gilles, 94430, Chennevieres sur Marne (FR); Billault, Vincent, 77130, St. Fargeau Ponthierry (FR)
(74) Mandataire: Chaffraix, Sylvain

(56) Documents cités:
- EP-A- 1 549 096
- TARIQ M M B ET AL: "Management of cacheable streaming multimedia content in networks with mobile nodes" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 novembre 2002 (2002-11-17), pages 2245-2249, XP010636148 ISBN: 0-7803-7632-3
- WEE-SENG SOH ET AL: "QoS Provisioning in Cellular Networks Based on Mobility Prediction Techniques" IEEE COMMUNICATIONS MAGAZINE, IEEE SERVICE CENTER, PISCATAWAY, US, vol. 41, no. 1, janvier 2003 (2003-01), pages 86-92, XP011092984 ISSN: 0163-6804

## Description

La présente invention est relative à la transmission de données depuis un serveur de contenu vers un terminal mobile de communication. Elle s'applique particulièrement bien à la situation où le terminal mobile de communication se déplace selon un parcours prévisible, par exemple lorsqu'il est embarqué dans un train, un bus, un métro ou tout autre moyen de transport suivant un chemin et un horaire fixés à l'avance.
Les données transmises peuvent par exemple être de la vidéo. Une application de l'invention consiste alors à la visualisation d'un film vidéo ou d'une émission télévisée temps-réel sur un écran de terminal mobile de communication, diffusé à partir d'un serveur de contenu.
Outre la vidéo, l'invention peut également s'appliquer à la transmission de données audio (musique, documentaires de radiodiffusion etc.) ou autres (une cartographie liée à l'emplacement du terminal mobile, par exemple).

Il est bien connu de transmettre des données depuis un serveur de contenu vers un terminal mobile de communication, au travers d'une infrastructure de réseaux de communication comportant un ensemble de stations de base.
À un instant donné, le terminal mobile est connecté à une station de base, par laquelle il reçoit les données émises par le serveur de contenu. En se déplaçant, il est amené à sortir du voisinage de cette station de base pour entrer dans celui d'une autre station de base. Dans cette situation bien connue appelée en anglais « *hand over* » (basculement), le terminal mobile de communication se déconnecte de la première station de base pour se connecter à la seconde.

Mais un problème important est alors d'éviter que l'utilisateur du terminal de communication soit conscient de ce basculement. Il est donc nécessaire d'anticiper ce basculement afin que lorsque le terminal mobile se connecte à la seconde station de base, celle-ci ait déjà les données émises par le serveur de contenu, prêtes à être transmises.
Cette anticipation permet a priori de résoudre le problème d'un basculement transparent pour l'utilisateur et d'une continuité de la qualité de service, mais elle pose d'autres problèmes qui sont jusqu'ici restés sans réponse dans l'état de la technique.

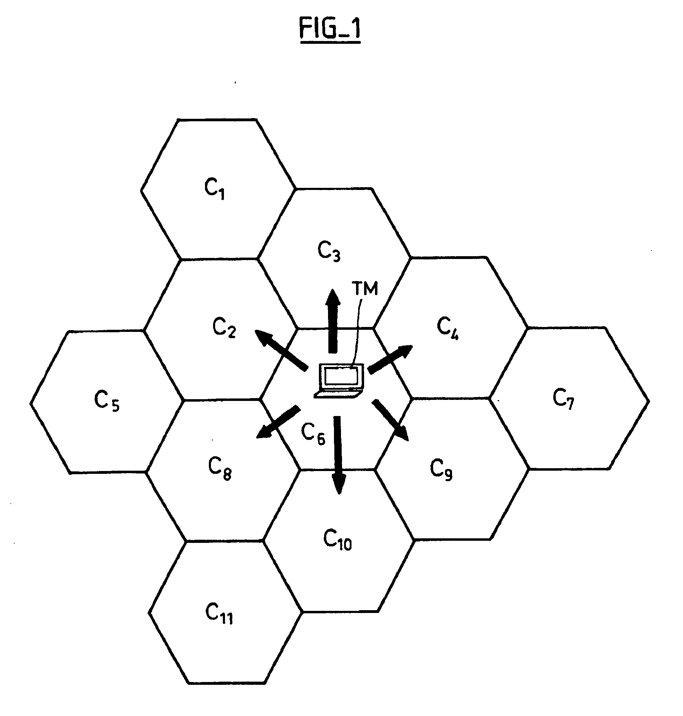

La figure 1 montre un exemple schématique typique de réseau de radiocommunication de type cellulaire. Une zone géographique est composée d'un ensemble de « cellules » C₁, C₂... C₁₁ correspondantes chacune au champ d'une station de base unique (non réprésentés). Chaque terminal mobile localisé dans une telle cellule est donc connecté à la station de base associé et les frontières entre les cellules correspondent aux zones de basculement (« *hand over* »).
Dans l'exemple de la figure 1, un terminal mobile de communication MT est situé dans la cellule C₆. Il reçoit par la station de base associé à la cellule C₆, des données émises par un serveur de contenu (non représenté). En se déplaçant, il peut entrer dans l'une des cellules C₂, C₃, C₄, C₈, C₉, C₁₀. Par conséquent, pour assurer une continuité de la qualité de service, les données émises par le serveur de contenu doivent également être transmises aux stations de base des cellules C₂, C₃, C₄, C₈, C₉, C₁₀, voisines de la cellule C₆.
Un tel mécanisme engendre deux grandes familles de problèmes techniques : d'une part, ces transmissions de grand volume de données engorgent le réseau de communication, et l'ensemble des éléments de réseau entre le serveur de contenu et les différentes stations de base ; d'autre part, les données transmises occupent un grand volume de la mémoire tampon de chacune des stations de base impliquées.

Aussi, afin de garantir la qualité de service, il faudrait à l'opérateur du réseau de communication, sur-dimensionner tant les mémoires tampons des stations de base que les capacités de transmission de son réseau de communication. Une telle approche est bien évidemment coûteuse et doit donc être évitée.
Des solutions partielles ont été proposées comme par exemple celles divulguées dans la demande de brevet EP 1 549 096, déposée par Alcatel le 29 juin 2005 ou l'article « Management of cacheable streaming multimedia content in networks with mobile nodes » de Muhammad Mukarram Bin Tariq et Atsushi Takeshita, paru dans Globecom'02, IEEE Global Telecommunications Conference, Conference Proceedings, Taipei, Taiwan, 17-21 novembre 2002. Ces solutions permettent la distribution de contenus multimédias dans un réseau de communication mobile en prenant en compte la localisation du terminal et les mémoires tampons des stations de base. Mais la gestion de ces mémoires tampons n'est pas optimisée du fait de la nécessité à recourir à la localisation du terminal.
L'invention a donc pour but de réduire les besoins de transmission de données dans le réseau de communication, tout en garantissant la qualité de service. Pour ce faire, l'invention a pour premier objet un dispositif de gestion pour la transmission de données notamment vidéo, depuis un serveur de contenu vers un terminal mobile de communication par l'intermédiaire de stations de base munies de mémoire tampon, auxquels le terminal mobile de communication est temporairement connecté. Ce dispositif dispose en outre :
- d'une base des chemins possibles, mémorisant les trajets que peut effectuer l'utilisateur dudit terminal mobile de communication,
- de moyens pour déterminer un ensemble de stations de base situées le long d'un chemin,
- et des moyens pour transmettre une part des données à chacune des stations de base.

Le dispositif de gestion est novateur en ce que
- la base associe des horaires possibles au chemin
- il dispose en outre d'un portail pour déterminer un chemin et un horaire parmi les chemins et horaires possibles contenus dans la base, en fonction d'informations fournies par l'utilisateur du terminal de communication et concernant son déplacement prévu,
- chaque part des données à transmettre aux stations de base est déterminée en fonction de l'horaire déterminé par le portail.

Selon un mode de réalisation de l'invention, le dispose d'une interface homme-machine pour proposer un ensemble de chemins et d'horaires possibles extraits de la base en fonction de la localisation du terminal mobile et de l'heure courante, parmi lequel l'utilisateur du terminal peut choisir un chemin et un horaire.

Pour palier la situation où l'horaire ne serait pas entièrement respecté, le dispositif de gestion de transmission de données selon l'invention dispose en outre de moyens de surveillance pour déterminer les temps de passage réels dudit terminal mobile par les stations de base situées le long du chemin, pour les comparer à l'horaire et pour adapter les transmissions des parts des données en fonction de cette comparaison.
Selon un mode de réalisation particulier, ces moyens de surveillance déterminer les temps de passage réel en fonction de signaux reçus des stations de base.

Selon un mode de réalisation, le moment de la transmission de chacune desdits parts vers la station de base correspondante est déterminé en fonction de l'horaire.

Selon un mode de réalisation de l'invention, chacune des parts comporte une quantité tampon, afin de permettre une redondance autour de chaque division des données.
Cette quantité tampon peut par exemple correspondre à une durée fixe ou à une durée variable dépendant de la durée de la part.

L'invention a également pour objet un procédé de transmission de données notamment vidéo, depuis un serveur de contenu vers un terminal mobile de communication par l'intermédiaire de stations de base munies de mémoire tampon, auxquels ledit terminal mobile de communication est temporairement connecté. Ce procédé comporte en outre les étapes suivantes :
- un chemin et un horaire sont déterminés à partir d'une base de chemins et d'horaires possibles, en fonction d'informations fournies par le terminal de communication et concernant son déplacement prévu,
- un ensemble de stations de base situées le long du chemin est déterminé
- une part des données est transmise à chacune des stations de base, chaque part étant déterminée en fonction de l'horaire

L'invention et ses avantages apparaîtront de façon plus claire dans la description de mises en oeuvre qui va suivre en liaison avec les figures annexées.
La figure 1, précédemment commentée, illustre un réseau cellulaire de communication connu de l'état de la technique.
La figure 2 est une représentation d'une mise en oeuvre de l'invention.
La figure 3 est un chronogramme explicitant la façon dont les données sont divisées en vue de leur transmission, selon un mode de réalisation de l'invention.
La figure 4 est un schéma fonctionnel du dispositif de gestion selon l'invention.

Le terminal mobile de communication selon l'invention peut bien évidemment être un téléphone portable, par exemple conforme aux normes GSM, UMTS etc., mais il peut aussi s'agir d'un assistant personnel numérique (PDA pour *Personal Digital Assistant*), d'un micro-ordinateur portable muni d'interfaces radios, etc. Il peut également s'agit d'un terminal non véritablement mobile mais assujetti à un véhicule lui-même mobile, par exemple un terminal de visualisation intégré devant les passagers d'un train ou d'un bus.

De façon connue en soi, l'utilisateur d'un tel terminal mobile (ou assimilé) peut se connecter à un portail afin de sélectionner des données à visualiser. Il peut s'agir typiquement d'un film, d'un reportage sportif, d'une émission de télévision, mais également de musique, de cartographie etc.

Dans le cadre de l'invention, l'utilisateur du terminal mobile se connecte en outre sur un portail qui peut être le même ou différent de celui précédemment afin de fournir des informations concernant son déplacement prévu. Ce déplacement prévu concerne notamment un chemin (aspect spatial) et un horaire (aspect temporel).

Le chemin correspond au trajet que l'utilisateur prévoit d'effectuer. Il s'agit donc d'une succession de points de passage. À chacun de ces points de passage correspond un temps de passage. L'ensemble de ces temps de passage forme l'horaire.
L'utilisateur du terminal mobile doit donc fournir une paire « chemin »/ « horaire ». Cette fourniture peut consister à simplement donner un identificateur de chemin (numéro de train, de bus..., destination etc.) et un identificateur d'horaire (temps de départ et/ou d'arrivée). Dans ce cas, les informations plus précises peuvent se trouver dans une base de chemins et d'horaires possibles.

De façon préférentielle, le portail peut proposer un ensemble de chemins et d'horaires possibles à partir de la localisation du terminal mobile et de l'heure courante, ainsi que d'informations mémorisées dans une base des chemins et horaires possibles.
Cette localisation peut être déterminée par des moyens connus en soi et à la portée de l'homme du métier. Par exemple, il peut s'agir simplement de déterminer à quelle station de base celui-ci est connecté. En fonction de la position de cette station de base, le portail peut déterminer à partir d'une base contenant l'ensemble des chemins possibles, quels sont les chemins accessibles à l'utilisateur du terminal mobile.
Par exemple, si le portail détermine que le terminal mobile est localisé dans une gare ferroviaire, il peut déterminer l'ensemble des chemins et horaires correspondants aux trains partants de cette gare à partir de l'heure courante.
Cet ensemble de chemins et d'horaires peut être proposé sur l'écran du terminal mobile afin de permettre à l'utilisateur de choisir la paire chemin/horaires qui l'intéresse.

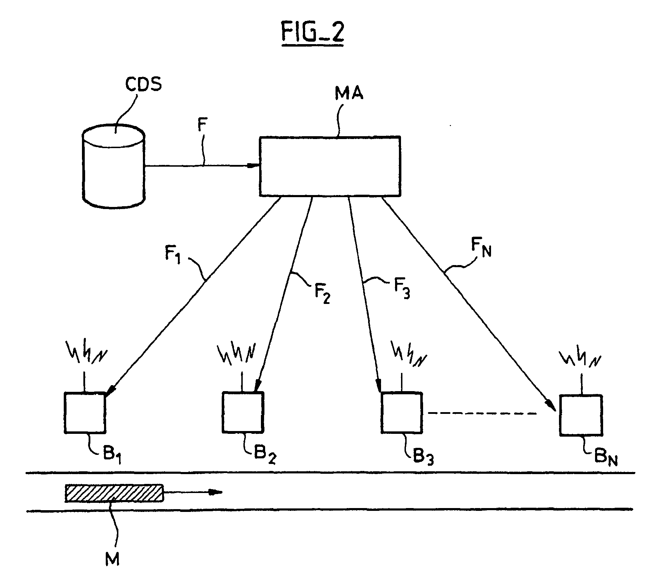

Dans l'exemple de la figure 2, le chemin choisi par l'utilisateur est le chemin R. Le terminal mobile M se déplace le long de ce chemin R, dans le sens indiqué par la flèche.
Après avoir sélectionné les données qu'il souhaite recevoir par un portail non représenté, l'utilisateur du terminal mobile M détermine à l'aide du dispositif de gestion de transmission de données MA le chemin R et l'horaire qu'il prévoit.

En fonction des indications, le dispositif de gestion MA dispose des moyens pour déterminer un ensemble B₁, B₂, B₃... B_{N} de stations de base situées le long du chemin R.
Pour ce faire, dans la base des chemins et horaires possibles dont dispose le dispositif de gestion MA, une association est faite entre chaque chemin possible et un ensemble correspondant de stations de base situées le long du chemin R. Cette association peut être réalisée par l'opérateur du réseau de communication et implantée dans la base.

Les données F choisies par l'utilisateur sont alors émises par un serveur de contenu CDS (pour « *Content Delivery* Server » en anglais) vers le dispositif de gestion MA, sous la forme d'un flux d'information.
Le dispositif de gestion MA divise alors les données en parts à transmettre vers l'ensemble de stations de base B₁, B₂, B₃... B_{N}. Ces parts sont calculées en fonction de l'horaire déterminé, c'est à dire au temps de passage près de chacune de ces stations de base.

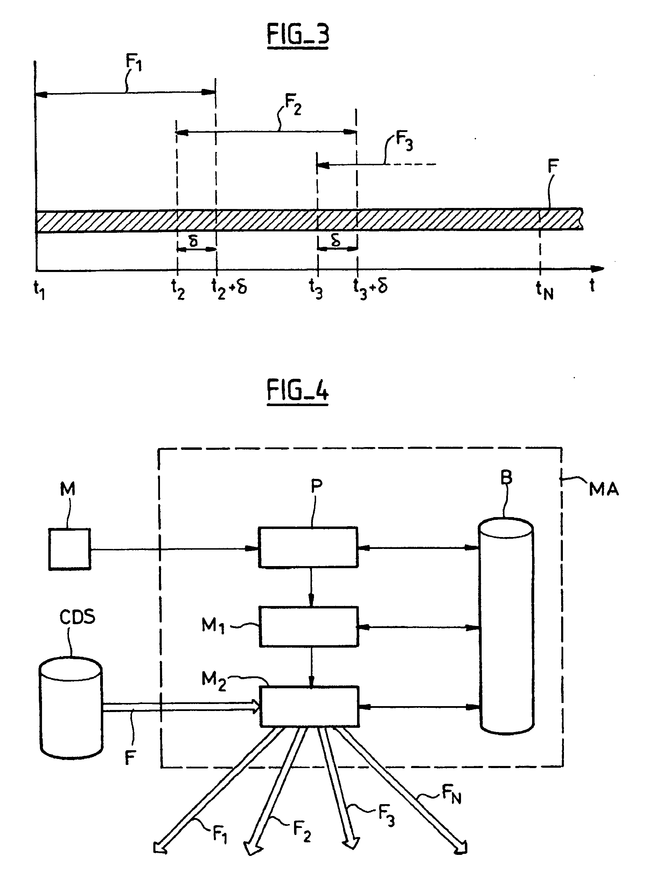

La figure 3 schématise la façon dont les données sont ainsi divisées en parts. Les données sont représentées horizontalement comme un flux d'information F le long de l'axe des temps T. Sur l'axe des temps figurent les temps de passage t₁, t₂, t₃... t_{N} vers les stations de base B₁, B₂, B₃... B_{N}, respectivement.
Les données F sont alors divisées en des parts de données F₁, F₂, F₃... F_{N-1} respectivement, en fonction des temps de passage. Chaque part Fₓ est déterminée comme l'ensemble des données débutant au temps tₓ et se terminant tₓ₊₁.
Selon une variante préférentielle, une quantité « tampon » est prévue afin de permettre une redondance autour de chaque division des données F, et d'ainsi éviter des effets de bord et de palier les éventuels petits retard de connexion du terminal mobile à la station de base B_{X+1}.

Cette quantité tampon correspond à une durée δ. La part de données à transmettre à la station de base Bₓ est selon cette variante celle comprise entre les temps Tₓ et Tₓ+δ. On obtient une redondance autour de chaque redondance correspondant à une durée δ.
Autrement dit, la même quantité tampon est transmise à la fois avec une part F_{X} et la part suivante F_{X+1}, étant entendu qu'il n'y a bien sûr par de quantité tampon à transmettre avec la dernière part constitutive des données à transmettre.
Il est à noter que cette durée δ peut ne pas être identique pour toutes les parts. Ainsi, plutôt que d'une durée fixe, on peut mettre en oeuvre une durée variable δ_{X} qui par exemple dépend du volume de la part. Il peut ainsi s'agir d'une proportion fixe de cette part, suivant une relation δ_{X} = p×(t_{X+1}-t_{X}) dans laquelle p est un pourcentage.

Les différentes parts F₁, F₂, F₃... F_{N} ainsi déterminées sont alors transmises aux stations de base correspondantes B₁, B₂, B₃... B_{N}. Elles peuvent être transmises toutes en même temps, ou bien les transmissions peuvent être réparties dans le temps en fonction de l'horaire, et plus précisément en fonction des temps de passage prévus auprès des stations de base. Ainsi, il peut être intéressant de réduire le temps s'écoulant entre la transmission d'une part de données à une station de base et la transmission de cette part par la station de base au terminal mobile. Il s'agit donc de minimiser l'écart entre ses deux transmissions en prenant en compte éventuellement la durée de la transmission, et les capacités technologique de la station de base (par exemple, si celle-ci est capable de commencer à transmettre le flux vers le terminal mobile M alors qu'elle n'a pas fini de recevoir ce flux du dispositif de gestion MA).
Cette variante de réalisation permet d'ainsi réduire l'encombrement des mémoires tampon des stations de base, tant en terme de volume occupé qu'en tant que temps d'occupation.

Selon un mode de réalisation de l'invention, le dispositif de gestion dispose en outre de moyens de surveillance. Ces moyens de surveillance détermine les temps de passage du terminal mobile M par les stations de base B₁, B₂, B₃... B_{N}, compare ces temps de passage à l'horaire et adapte - le cas échéant - les transmissions des parts F₁, F₂, F₃... F_{N} des données en fonction de cette comparaison.
Ainsi, lorsque le terminal mobile M passe à proximité d'une station de base, il se connecte à celle-ci qui lui transmet la part de données correspondante. Cette station de base peut alors remonter un signal aux moyens de surveillance du dispositif de gestion MA afin de l'informer que le terminal mobile M est passé à son voisinage. En collectant ces signaux, les moyens de surveillance peuvent déterminer le parcours réel et les différents de passage et ainsi s'il est en retard, en ligne ou en avance par rapport à l'horaire prévu, c'est-à-dire celui déterminé auprès du portail par l'utilisateur. Les moyens de surveillance peuvent ainsi permettre au dispositif de gestion MA de s'adapter à la réalité de la situation. Il peut ainsi recalculer les parts de données restant à transmettre et également modifier le moment où il les transmet vers les stations de base.

La figure 4 donne une schématisation fonctionnelle du dispositif de gestion MA. Ce dispositif comporte une base des chemins et horaires possibles B, dont le but est de mémoriser sous une forme organisée l'ensemble des chemins possibles (lignes de trains, de bus, routes principales etc.) et d'y associer les horaires possibles (horaires des trains, bus etc., jalons le long d'une route principale...) ainsi qu'un ensemble de stations de base. Le dispositif de gestion MA comprend en outre un portail P qui permet de déterminer un chemin et un horaire parmi le contenu de la base B en fonction d'informations fournies par le terminal de communication M concernant son déplacement prévu.

Ce chemin déterminé est transmis à des moyens M₁ pour déterminer un ensemble de stations de base situées le long dudit chemin, à partir de contenu de la base B.
Enfin, des moyens M₂ sont prévus pour transmettre une part des données F reçue d'un serveur de contenu CDS à chacune desdites stations de base, chaque part (F₁, F₂, F₃... F_{N}) étant déterminée en fonction de l'horaire déterminé par le portail P en collaboration avec la base B.

## Revendications

1. Dispositif de gestion (MA) pour la transmission de données (F), notamment vidéo, depuis un serveur de contenu (CDS) vers un terminal mobile de communication (M) par l'intermédiaire de stations de base munies de mémoire tampon, auxquels ledit terminal mobile de communication est temporairement connecté, **caractérisé en ce qu'**il dispose
• d'une base des chemins possibles, mémorisant les trajets que peut effectuer l'utilisateur dudit terminal
• de moyens pour déterminer un ensemble de stations de base (B₁, B₂, B₃... B_{N}) situées le long d'un desdits chemins,
• de moyens pour transmettre une part desdites données à chacune desdites stations de base
**caractérisé en ce que** ladite base est adaptée pour associer des horaires possibles auxdits chemins et **en ce que** ledit dispositif dispose en outre d'un portail pour déterminer un chemin (R) et un horaire parmi lesdits chemins et horaires possibles, en fonction d'informations fournies par l'utilisateur dudit terminal de communication et concernant son déplacement prévu, et **en ce que** chaque part (F₁, F₂, F₃... F_{N}) est déterminée en fonction dudit horaire.

2. Dispositif de gestion (MA) pour la transmission de données (F) selon la revendication 1, dans lequel ledit portail dispose d'une interface homme-machine adaptée pour proposer un ensemble de chemins et d'horaires possibles extraits de ladite base en fonction de la localisation dudit terminal mobile et de l'heure courante, parmi lequel l'utilisateur dudit terminal peut choisir un chemin et un horaire.

3. Dispositif de gestion (MA) pour la transmission de données (F), selon l'une des revendications 1 ou 2, disposant en outre de moyens de surveillance adaptée pour déterminer les temps de passage réels dudit terminal mobile (M) par les stations de base (B₁, B₂, B₃... B_{N}) situées le long dudit chemin (R), pour les comparer audit horaire et pour adapter les transmissions des parts (F₁, F₂, F₃... F_{N}) desdites données en fonction de cette comparaison.

4. Dispositif de gestion (MA) pour la transmission de données (F), selon la revendication 3, dans lequel lesdits moyens de surveillance sont adaptés à déterminer les temps de passage réel en fonction de signaux reçus desdites stations de base (B₁, B₂, B₃... B_{N}).

5. Dispositif de gestion (MA) pour la transmission de données (F) selon l'une des revendications précédentes, dans lequel lesdits moyens de surveillances sont adaptés pour déterminer le moment de la transmission de chacune desdits parts (F₁, F₂, F₃... F_{N}) vers la station de base correspondante, en fonction dudit horaire.

6. Dispositif de gestion (MA) pour la transmission de données (F) selon l'une des revendications précédentes, dans lequel chacune desdites parts comporte une quantité tampon, afin de permettre une redondance autour de chaque division desdites données (F).

7. Dispositif de gestion (MA) pour la transmission de données (F) selon la revendication précédente, dans lequel la quantité tampon correspond à une durée fixe.

8. Dispositif de gestion (MA) pour la transmission de données (F) selon la revendication 6, dans lequel la quantité tampon de chacune desdites parts correspond à une durée variable dépendant de la durée de ladite part.

9. Procédé de transmission de données (F) notamment vidéo, depuis un serveur de contenu (CDS) vers un terminal mobile de communication (M) par l'intermédiaire de stations de base (B₁, B₂, B₃... B_{N}) munies de mémoire tampon, auxquels ledit terminal mobile de communication est temporairement connecté, dans lequel
• un chemin (R) et un horaire sont déterminés dans une base de chemins et d'horaires possibles mémorisant les trajets que peut effectuer l'utilisateur dudit terminal, en fonction d'informations fournies par l'utilisateur dudit terminal de communication et concernant son déplacement prévu,
• un ensemble de stations de base (B₁, B₂, B₃... B_{N}) situées le long dudit chemin (R) est déterminé
• une part desdites données est transmise à chacune desdites stations de base,
**caractérisé en ce que** un horaire est en outre déterminé dans une base de chemins et d'horaires possibles, en fonction d'informations fournies par l'utilisateur dudit terminal de communication et concernant son déplacement prévu, et **en ce que** chaque part (F₁, F₂, F₃... F_{N}) est déterminée en fonction dudit horaire

10. Procédé selon la revendication précédente, dans lequel on détermine les temps de passage réels dudit terminal mobile (M) par les stations de base (B₁, B₂, B₃... B_{N}) situées le long dudit chemin (R), pour les comparer audit horaire et pour adapter les transmissions des parts (F₁, F₂, F₃... F_{N}) desdites données en fonction de cette comparaison.

11. Procédé selon l'une des revendications 9 ou 10, dans lequel le moment de la transmission de chacune desdits parts (F₁, F₂, F₃... F_{N}) vers la station de base correspondante est déterminé en fonction dudit horaire.

12. Procédé selon l'une des revendications 9 à 11, dans lequel chacune desdites parts comporte une quantité tampon, afin de permettre une redondance autour de chaque division desdites données (F).

## Claims

1. A management arrangement (MA) for transmitting data (F), in particular video data, from a content delivery server (CDS) to a mobile communications terminal (M) via base stations provided with buffer memories and to which said mobile communications terminal is temporarily connected, said management arrangement being **characterized in that** it has:
• a database of possible routes, storing the paths that the user of said terminal might take;
• means for determining a set of base stations (B₁, B₂, B₃... B_{N}) situated along one of said routes; and
• means for transmitting a piece of said data to each of said base stations;
said management arrangement being **characterized in that** said database associates possible timetables with said routes, and **in that** it also has a portal for determining a route (R) and a timetable from among said possible routes and timetables, according to information supplied by the user of said communications terminal, and concerning the user's planned journey, and **in that** each piece (F₁, F₂, F₃... F_{N}) is determined according to said timetable,

2. A management arrangement (MA) for transmitting data (F) according to claim 1, in which said portal has a man-machine interface for proposing a set of possible routes and of possible timetables extracted from said database according to the location of said mobile terminal and of the current time, from which set the user of said terminal can choose a route and a timetable.

3. A management arrangement (MA) for transmitting data (F) according to one of claims 1 or 2, further having monitoring means for determining the real checkpoint-passing times at which said mobile terminal (M) goes past the base stations (B₁, B₂, 6₃... B_{N}) situated along said route (R), so as to compare them with said timetable and so as to adapt the transmission of the pieces (F₁, F₂, F₃... F_{N}) of said data according to said comparison.

4. A management arrangement (MA) for transmitting data (F) according to claim 3, in which said monitoring means may determine the real checkpoint-passing times according to the signals received from said base stations (B₁, B₂, B₃... B_{N}).

5. A management arrangement (MA) for transmitting data (F) according to one of the above claims, in which said monitoring means are adapted to determine the time at which each of said pieces (F₁, F₂, F₃... F_{N}) is transmitted to the corresponding base station according to said timetable.

6. A management arrangement (MA) for transmitting data (F) according to one of the above claims, in which each of said pieces includes a buffer quantity, in order to enable redundancy to be obtained around each subdivision of said data (F).

7. A management arrangement (MA) for transmitting data (F) according to the preceding claim, in which the buffer quantity corresponds to a fixed length of time.

8. A management arrangement (MA) for transmitting data (F) according to claim 6, in which the buffer quantity of each of said pieces corresponds to a variable length of time according to the length of time of said piece,

9. A method of transmitting data (F), in particular video data, from a content delivery server (CDS) to a mobile communications terminal (M) via base stations (B₁, B₂, B₃... B_{N}) provided with buffer memories and to which said mobile communications terminal is temporarily connected, in which method:
• a route (R) and a timetable are determined in a database of possible routes and of possible timetables storing the routes that the user of said terminal might take, according to information supplied by the user of said communications terminal and concerning the planned journey of said user;
• a set of base stations (B₁, B₂, B₃... B_{N}) situated along said route (R) is determined_{;} and
• a piece of said data is transmitted to each of said base stations,
said method being **characterized in that** a timetable is determined from among said possible routes and timetables, according to information supplied by the user of said communications terminal, and concerning the user's planned journey, and **in that** each piece(F₁, F₂, F₃... F_{N}) is determined according to said timetable.

10. A method according to the preceding claim, in which the real checkpoint-passing times at which said mobile terminal (M) goes past the base stations (B₁, B₂, B₃... B_{N}) situated along said route (R) are determined so as to compare them with said timetable and so as to adapt the transmission of the pieces (F₁, F₂, F₃... F_{N}) of said data according to said comparison,

11. A method according to claim 9 or 10, in which the time at which each of said pieces (F₁, F₂, F₃... F_{N}) is transmitted to the corresponding base station is determined according to said timetable.

12. A method according to one of claims 9 to 11, in which each of said pieces includes a buffer quantity, in order to enable redundancy to be obtained around each subdivision of said data (F).

## Patentansprüche

1. verwaltungsvorrichtung (MA) zur Übertragung von Daten (F), insbesondere von Videodaten, von einem Inhaltsserver (CDS) an ein mobiles Kommunikationsendgerät (M) über mit einem Pufferspeicher ausgestattete Basisstationen, an weiche das mobile Kommunikationsendgerät vorübergehend angeschlossen ist, **dadurch gekennzeichnet, dass** sie umfasst:
• Eine Basis mit möglichen Routen, welche die Routen, die der Benutzer des besagten Endgerätes einschlagen kann, speichert,
• Mittel zum Ermitteln einer Gruppe von Basisstationen (B₁, B₂, B₃ ... B_{N}), welche sich entlang der besagten Routen befinden,
• Mittel zum Übertragen eines Teils der besagten Daten an eine jede der besagten Basisstationen,
**dadurch gekennzeichnet, dass** die besagte Basisstation fähig ist, mögliche Uhrzeiten mit den besagten Routen zu assoziieren, und dass die besagte Vorrichtung weiterhin über ein Portal verfügt, um eine Route (R) und eine Uhrzeit unter den besagten möglichen Routen und Uhrzeiten gemäß den vom Benutzer des besagten Kommunikationsendgeräts in Bezug auf seine geplante Route gelieferten Informationen zu ermitteln, und dass jeder Teil (F₁, F₂, F₃... F_{N}) entsprechend der besagten Uhrzeit ermittelt wird.

2. Verwaltungsvorrichtung (MA) zur Übertragung von Daten (F) nach Anspruch 1, wobei das besagte Portal über eine Mensch-Maschine-Schnittstelle verfügt, welche fähig ist, eine Gruppe von möglichen Routen und Uhrzeiten vorzuschlagen, welche gemäß der Position des besagten mobilen Endgeräts und der aktuellen Uhrzeit aus der besagten Basis extrahiert werden, unter welchen der Benutzer des besagten Endgeräts eine Route und eine Uhrzeit auswählen kann.

3. Verwaltungsvorrichtung (MA) zur Übertragung von Daten (F) nach einem der Ansprüche 1 oder 2, welche weiterhin über Überwachungsmittel verfügt, welche fähig sind, die Zeiten des tatsächlichen Passierens des besagten Mobilendgeräts (M) der Basisstationen (B₁, B₂, B₃... B_{N}), welche sich entlang der besagten Route (R) befinden, zu ermitteln, um sie mit der besagten Uhrzeit zu vergleichen und die Übertragungen von Teilen (F₁, F₂, F₃... F_{N}) der besagten Daten diesem Vergleich entsprechend anzupassen.

4. Verwaltungsvorrichtung (MA) zur Übertragung von Daten (F) nach Anspruch 3, wobei die besagten Überwachungsmittel fähig sind, die tatsächlichen Zeiten der Passage gemäß den von den besagten Basisstationen (B₁, B₂, B₃ ... B_{N}) empfangenen Signalen zu ermitteln.

5. Verwaltungsvorrichtung (MA) zur Übertragung von Daten (F) nach einem der verstehenden Ansprüche, wobei die besagten Überwachungsmittel fähig sind, den Zeitpunkt der Übertragung eines jeden der besagten Teile (F₁, F₂, F₃ ... F_{N}) an die entsprechende Basisstation gemäß der besagten Uhrzeit zu ermitteln.

6. Verwaltungsvorrichtung (MA) zur Übertragung von Daten (F) nach einem der vorstehenden Ansprüche, wobei ein jeder der besagten Teile eine Puffermenge enthält, um eine Redundanz in der Umgebung jeder Division der besagten Daten (F) zu ermöglichen.

7. Verwaltungsvorrichtung (MA) zur Übertragung von Daten (F) nach dem vorstehenden Anspruch, wobei die Puffermenge einer festen Dauer entspricht.

8. Verwaltungsvorrichtung (MA) zur Übertragung von Daten (F) nach Anspruch 6, wobei die Puffermenge eines jeden der besagten Teile einer variablen Dauer, welche von der Dauer des besagten Teils abhängt, entspricht.

9. Verfahren zur Übertragung von Daten (F), insbesondere von Videodaten, von einem Inhaltsserver (CDS) an ein mobiles Kommunikationsendgerät (M) über mit einem Pufferspeicher ausgestattete Basisstationen, an welche das mobile Kommunikationsendgerät vorübergehend angeschlossen ist, wobei:
• Eine Route (R) und eine Uhrzeit in einer Basis mit möglichen Routen und Uhrzeiten, welche die Routen, die der Benutzer des besagten Endgeräts einschlagen kann, gemäß den vom Benutzer des besagten Kommunikationsendgeräts in Bezug auf seine geplante Route speichert, ermittelt werden,
• eine Gruppe von Basisstationen (B₁, B₂, B₃ ... B_{N}), welche sich entlang der besagten Routen befinden, ermittelt wird,
• ein Teil der besagten Daten an eine jede der besagten Basisstationen übertragen wird,
**dadurch gekennzeichnet, dass** weiterhin eine Uhrzeit in einer Basis von möglichen Routen und Uhrzeiten entsprechend von Informationen, welche vom Benutzer des besagten Kommunikationsendgerät geliefert werden und seine geplant Route betreffen, ermittelt wird, und dass jeder Teil (F₁, F₂, F₃ ... F_{N}) entsprechend der besagten Uhrzeit ermittelt wird.

10. Verfahren nach dem vorstehenden Anspruch, wobei man die tatsächlichen Zeiten des Passierens des besagten mobilen, Endgerätes (M) der Basisstationen (B₁, B₂, B₃ ... B_{N}), welche sich entlang der besagten Route (R) befinden, ermittelt, um sie mit der besagten Uhrzeit zu vergleichen und die Übertragungen von Teilen (F₁, F₂, F₃ ... F_{N}) der besagten Daten diesem Vergleich entsprechend anzupassen.

11. Verfahren nach einem der Ansprüche 9 oder 10, wobei der Zeitpunkt der Übertragung eines jeden der besagten Teile (F₁, F₂, F₃ ... F_{N}) an die entsprechende Basisstation gemäß der besagten Uhrzeit ermittelt wird.

12. Verfahren nach einem der Ansprüche 9 bis 11, wobei ein jeder der Teile eine Puffermenge enthält, um eine Redundanz in der Umgebung jeder Division der besagten Daten (F) zu ermöglichen.
